# DEMANDE DE BREVET EUROPEEN

(11) **EP 2 135 691 A1**
(43) Date de publication de la demande: **23.12.2009**
(21) Numéro de dépôt: 08010908.5
(22) Date de dépôt: 16.06.2008
(51) Int. Cl.: B21C 37/08, E04D 13/08

(54) **Tuyau de descente d`eau de gouttiére, dispositif por l`évacuation d`eau d`une toiture et procédé de fabrication dudit tuyau**

(71) Demandeur: Bouché, Jean-Marc, 5362 Achet (BE)
(72) Inventeur: Bouché, Jean-Marc, 5362 Achet (BE)

(57) **Abrégé**

Tuyau (2) de descente d'eau de gouttière, ledit tuyau présentant une section transversale polygonale (3,4,5,6,7) et étant torsadé et procédé pour la fabrication dudit tuyau.

## Description

### Domaine de l'invention

L'invention se rapporte à l'évacuation des eaux de toiture de bâtiments.

Elle concerne spécifiquement un tuyau de descente d'eau de gouttière, du type à section transversale polygonale.

### Etat de la technique

Les eaux de pluie sont habituellement recueillies au bas des toitures des bâtiments dans des gouttières raccordées à un réseau d'égouttage par un ou plusieurs tuyaux de descente d'eau. De manière classique, les tuyaux de descente des eaux de pluie présentent une section circulaire ou une section carrée. Dans les immeubles d'habitation, on tend de plus en plus, pour des raisons d'esthétique et de résistance mécanique, à utiliser des tuyaux de descente d'eau de section carrée. La section carrée présente toutefois l'inconvénient de perturber l'écoulement de l'eau le long de la paroi du tuyau, générant du bruit et augmentant le risque de colmatage du tuyau par des feuilles ou d'autres détritus entraînés par l'eau de la toiture.

### Résumé de l'invention

L'invention vise à remédier aux inconvénients et désavantages des tuyaux de descente connus, décrits plus haut.

L'invention a plus particulièrement pour objectif de fournir un tuyau de descente d'eau de gouttière, de section polygonale, dans lequel le bruit généré par la circulation de l'eau est fortement réduit.

Un autre objectif de l'invention consiste à fournir un tuyau de descente d'eau de gouttière, de section polygonale, dans lequel le risque de colmatage du tuyau par des feuilles ou d'autres détritus est réduit.

De manière plus générale, l'invention a pour objectif de fournir un tuyau de descente d'eau de gouttière, de section polygonale, présentant une perte de charge réduite à la circulation de l'eau de pluie.

En conséquence, l'invention concerne un tuyau de descente d'eau de gouttière, de section transversale polygonale, le tuyau se caractérisant en ce qu'il est torsadé.

### Description détaillée de l'invention

Le tuyau selon l'invention est destiné à être raccordé à une gouttière située au bas d'une toiture d'un bâtiment. Il a pour fonction d'évacuer l'eau de pluie de la gouttière par exemple vers un collecteur ou dans un égout. Dans sa fonction, le tuyau occupe généralement une position verticale, parfois oblique.

Selon l'invention, le tuyau présente une section polygonale. Le polygone peut être un polygone régulier ou un polygone irrégulier, les polygones réguliers étant néanmoins préférés.
Le nombre de côtés du polygone n'est pas critique pour la définition de l'invention. En pratique, il est préférable que le polygone présente plus de trois côtés, de préférence au moins quatre côtés. Les polygones de quatre à huit côtés sont recommandés, ceux de cinq et six côtés étant préférés.
Les pentagones réguliers sont spécialement préférés. L'aire de la section du tuyau polygonal n'est pas critique pour la définition de l'invention. Elle va dépendre notamment du débit nominal d'eau et de la longueur du tuyau et peut être déterminée dans chaque cas particulier par l'homme du métier. Des sections communément utilisables dans le cadre de l'invention correspondent à des diamètres (diamètre du cercle circonscrit au polygone) compris entre 3 et 25 cm, par exemple de 5 à 20 cm, les valeurs de 8 à 16 cm étant recommandées (valeurs exemplatives, non limitatives).

Selon une autre caractéristique de l'invention, le tuyau polygonal est torsadé.

Toutes autres choses étant égales par ailleurs, on a observé que l'utilisation d'un tuyau torsadé réduisait les pertes de charge, diminuait le bruit et réduisait le risque d'un colmatage du tuyau par des feuilles ou d'autres détritus évacués dans la gouttière.

La valeur optimum du pas de la torsade du tuyau va dépendre de divers facteurs, parmi lesquels figurent notamment la superficie de la section transversale du tuyau, sa longueur, la matière en laquelle il est fabriqué et le débit d'eau qui y circule dans une utilisation normale. En pratique, la valeur optimale du pas peut être déterminée dans chaque cas particulier par l'homme du métier, au moyen d'un travail de recherche de routine. En pratique, on obtient de bons résultats dans la majorité des cas en sélectionnant un pas de 0,2 à 2,0 mètres, de préférence de 0,5 à 1,0 mètres.

La matière en laquelle le tuyau est fabriqué n'est pas critique pour la définition de l'invention. En pratique, le tuyau doit être étanche à l'eau et chimiquement inerte vis-à-vis de celle-ci et il doit résister aux efforts mécaniques auquel il est normalement soumis au cours d'une utilisation normale pour l'évacuation d'eau de pluie d'une toiture. Des exemples de matériaux utilisables dans la construction du tuyau selon l'invention comprennent le zinc et les alliages de zinc, le cuivre et les alliages de cuivre, l'acier galvanisé, l'acier plombé, les aciers inoxydables et les matières polymériques telles que le polychlorure de vinyle et les polyoléfines (spécialement le polyéthylène, le polybutylène et le polypropylène). Les matériaux préférés comprennent le zinc, le cuivre et le polychlorure de vinyle éventuellement chargé de fibres minérales (par exemple des fibres de verre) ou de fibres organiques [par exemple des fibres en poly-para-phénylène téréphtalamide KEVLAR^{®} (DUPONT)]. Le zinc et le cuivre sont spécialement recommandés dans la majorité des cas.

Le tuyau selon l'invention est de préférence sensiblement rectiligne. Il n'est toutefois pas exclu, pour certaines applications particulières, que le tuyau soit cintré ou coudé.

Dans une forme de réalisation particulière de l'invention, le tuyau torsadé est prolongé, à au moins une de ses extrémités, par un embout de section circulaire. Cet embout est destiné à connecter le tuyau à une gouttière ou à un collecteur d'évacuation d'eau ou à un égout. En variante on peut également utiliser un embout de section polygonale (par exemple carrée), non torsadé. Dans cette variante de l'invention, il est préférable que l'embout non torsadé présente la même section polygonale que le tuyau torsadé. L'embout non torsadé peut être disposé en amont du tuyau torsadé pour le raccorder à une gouttière ou en aval du tuyau torsadé pour le raccorder à un collecteur d'évacuation d'eau ou à un égout ou à un autre tuyau torsadé conforme à l'invention.
Dans la forme de réalisation particulière qui vient d'être décrite et dans sa variante d'exécution, l'embout (circulaire ou polygonal non torsadé) peut être indifféremment un embout rectiligne ou un embout coudé.

Le tuyau selon l'invention s'applique à tous types de bâtiments, tels que des maisons d'habitation unifamiliales, des immeubles à appartements, des bâtiments administratifs et des bâtiments industriels. Il trouve une application spécialement avantageuse dans les immeubles d'habitation.

L'invention concerne aussi un dispositif pour l'évacuation d'eau d'une toiture vers un égout, dans lequel une gouttière est raccordée à l'égout par un tuyau de descente de section polygonale, qui est torsadé conformément à l'invention.

Le tuyau selon l'invention peut être fabriqué par tout procédé connu adéquat, généralement au départ d'un tuyau droit que l'on torsade. Le choix du procédé adéquat va dépendre en pratique du choix du matériau du tuyau et peut être déterminé aisément par l'homme du métier.

L'invention concerne également un procédé pour la fabrication d'un tuyau d'évacuation d'eau de gouttière, selon lequel on divise une tôle métallique rectangulaire plane en plusieurs pans longitudinaux d'égales largeurs, on plie ces pans le long de leurs côtés longitudinaux communs pour amener les deux bords longitudinaux de la tôle en contact et former un tuyau polygonal rectiligne, on soumet ensuite les deux pans d'extrémité du tuyau polygonal à un étirage en sens opposé en faisant glisser les deux bords précités l'un sur l'autre, ce qui a pour effet de torsader le tuyau et on soude lesdits bords longitudinaux.

### Brève description des figures

Des particularités et détails de l'invention vont apparaître au cours de la description suivante des figures annexées, qui représentent une forme de réalisation particulière de l'invention.
La figure 1 est une vue verticale de face d'une forme de réalisation particulière du tuyau selon l'invention, raccordé à une gouttière ;
La figure 2 est une section transversale selon le plan X de la figure 1 ; et
Les figures 3 et 4 sont des schémas explicatifs d'un procédé préféré pour la fabrication du tuyau de la figure 1.

Les figures ne sont pas dessinées à l'échelle.

Généralement, les mêmes numéros de référence désignent les mêmes éléments.

### Description détaillée de modes de réalisation particuliers

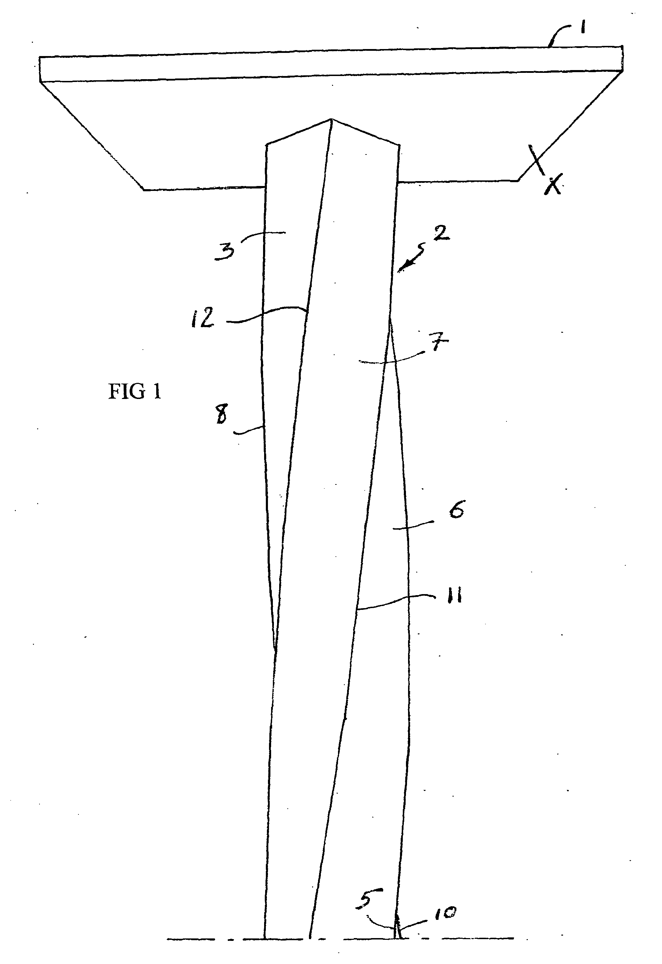

A la figure 1, on a représenté schématiquement une gouttière 1 située en bordure d'une toiture (non représentée), d'un bâtiment. La gouttière 1 a pour fonction de recueillir les eaux de pluie de la toiture. Elle est raccordée à un tuyau de descente d'eau 2 qui a pour fonction de transférer l'eau de pluie de la gouttière vers un égout ou un autre système d'évacuation d'eau, non représenté.

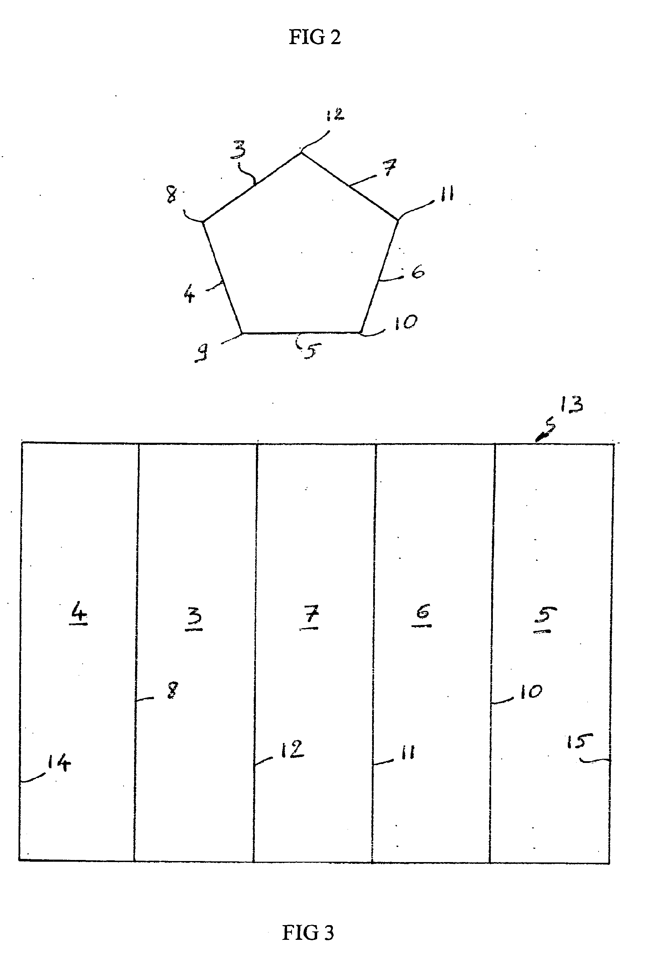

Conformément à l'invention, le tuyau de descente d'eau 2 est un tuyau droit de section transversale pentagonale, présentant cinq côtés 3, 4, 5, 6 et 7 formant entre eux cinq arêtes 8, 9, 10, 11 et 12 (figure 2). Conformément à l'invention et comme visible à la figure 1, le tuyau 2 est torsadé.

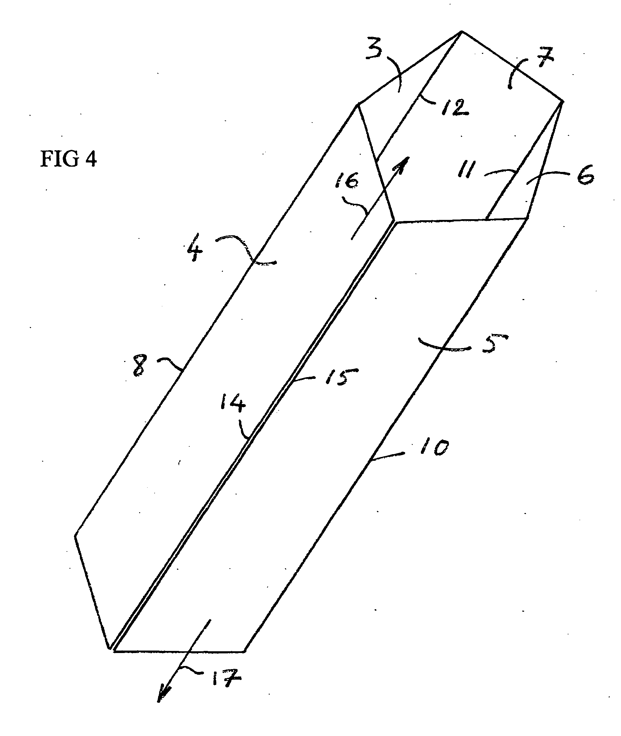

La tuyau 2 est en métal, par exemple en zinc ou en cuivre. Pour le fabriquer, on a d'abord divisé une tôle rectangulaire 13 (figure 3) en cinq pans longitudinaux d'égales largeurs, respectivement 4, 3, 7, 6 et 5. On a ensuite plié la tôle le long des quatre côtés longitudinaux communs des pans, respectivement 8, 12, 11 et 10 pour amener côte à côte les deux bords longitudinaux 14 et 15 de la tôle 13 (figure 4) et former un tuyau rectiligne pentagonal. Ensuite, on a soumis les deux pans d'extrémité 4 et 5 à un étirage en sens opposés schématisés par les flèches 16 et 17, en faisant glisser les deux bords 14 et 15 l'un sur l'autre, ce qui a eu pour effet de torsader le tuyau autour de son axe longitudinal. On a ensuite soudé les bords 14 et 15 l'un à l'autre pour former l'arête 9 du tuyau torsadé 2.

## Revendications

1. Tuyau de descente d'eau de gouttière, de section transversale polygonale, **caractérisé en ce que** le tuyau (2) est torsadé.

2. Tuyau selon la revendication 1, **caractérisé en ce que** le tuyau (2) est sensiblement rectiligne.

3. Tuyau selon la revendication 1 ou 2, **caractérisé en ce que** la section polygonale est un polygone sensiblement régulier.

4. Tuyau selon la revendication 3, **caractérisé en ce que** le polygone comprend de quatre à huit côtés (3, 4, 5, 6, 7).

5. Tuyau selon la revendication 4, **caractérisé en ce que** le polygone comprend cinq côtés (3, 4, 5, 6, 7).

6. Tuyau selon l'une quelconque des revendications 1 à 5, **caractérisé en ce que** le pas du tuyau torsadé (2) est de 0,5 à 2,0 m.

7. Tuyau selon l'une quelconque des revendications 1 à 6, **caractérisé en ce qu'**il est en un matériau sélectionné parmi le zinc et les alliages de zinc, le cuivre et les alliages de cuivre, l'acier galvanisé, l'acier plombé, les aciers inoxydables et les matières polymériques.

8. Tuyau selon l'une quelconque des revendications 1 à 7, **caractérisé en ce que** le tuyau torsadé (2) est prolongé, à une extrémité, par un embout non torsadé, de section polygonale ou circulaire, destiné à le raccorder à une gouttière (1).

9. Dispositif pour l'évacuation d'eau d'une toiture vers un égout, comprenant une gouttière située sous la toiture et raccordée à l'égout au moyen d'un tuyau de descente, **caractérisé en ce que** le tuyau de descente (2) est conforme à l'une quelconque des revendications 1 à 8.

10. Procédé pour la fabrication d'un tuyau de descente d'eau de gouttière conforme à l'une quelconque des revendications 1 à 8, selon lequel on divise une tôle métallique rectangulaire (13) en plusieurs pans longitudinaux (4, 3, 7, 6, 5) d'égales largeurs, on plie les pans le long de leurs côtés longitudinaux communs (8, 12, 11, 10) pour amener les deux bords longitudinaux (14, 15) de la tôle en contact et former un tuyau polygonal rectiligne, on soumet ensuite les deux pans d'extrémité (4, 5) du tuyau polygonal à un étirage en sens opposés (16, 17) en faisant glisser les deux bords précités (14, 15) l'un sur l'autre, ce qui a pour effet de torsader le tuyau et on soude lesdits bords longitudinaux.
